# EUROPEAN PATENT APPLICATION

(11) **EP 1 622 140 A2**
(43) Date of publication of application: **01.02.2006**
(21) Application number: 05106851.8
(22) Date of filing: 26.07.2005
(51) Int. Cl.: G11B 15/28, G11B 15/60

(54) **A pinch roller assembly**

(30) Priority: 29.07.2004 KR 2004059557
(71) Applicant: SAMSUNG ELECTRONICS CO., LTD., Suwon, Gyeonggi-do 442-742 (KR)
(72) Inventor: Park, Byeng-bae, Gyeonggi-do (KR); Sim, Jae-hoon, Yeongtong-gu Suwon-si Gyeonggi-do (KR); Choi, Hyeong-seok 250-1404 Hwanggol-maeul, Yeongtong-gu Suwon-si Gyeonggi-do, (KR); Oh, Jeong-hyeob, Dongan-gu Anyang-si Gyeonggi-do (KR); Lee, Seung-woo 542-106, Sinnamusil Ssangyong Apt., Suwon-si Gyeonggi-do (KR)
(74) Representative: Geary, Stuart Lloyd

(57) **Abstract**

A pinch roller assembly for a magnetic recording and reproducing apparatus has a pinch roller configured to selectively contact a capstan axis mounted on a deck base. A pinch arm is provided for rotatably supporting the pinch roller on one end thereof. The pinch arm is pivotally mounted on the deck base for movement between first position and second positions. When in first position, the pinch roller is adjacent to the capstan axis, and when in the second position the pinch roller is spaced away from the capstan axis. A pinch axis is mounted on the other end of the pinch arm. The pinch axis is a pivot point of the pinch arm. A pinch spring is disposed on the pinch axis to elastically support the pinch arm when being pivoted to the first position toward the capstan axis. A separation preventing protrusion is integrally formed with the pinch axis to prevent deviation of the pinch spring.

## Description

The present invention relates to a pinch roller assembly for use in a tape deck, the assembly comprising a pinch spring rotating about, and mounted on, a pinch axis.

Generally, a tape runner for a magnetic recording and playback apparatus comprises a pair of rotary reel tables, a capstan motor for driving the reel tables, a pair of pole base assemblies, a capstan axis, and a pinch roller assembly for pressing the tape against the capstan axis using a certain predetermined pressure.

When the tape is loaded, the pinch roller assembly moves towards the capstan axis using a tape loading device. Thus, the tape is pressed against the capstan axis by the predetermined pressure. Thus allowing the tape to run relatively smoothly.

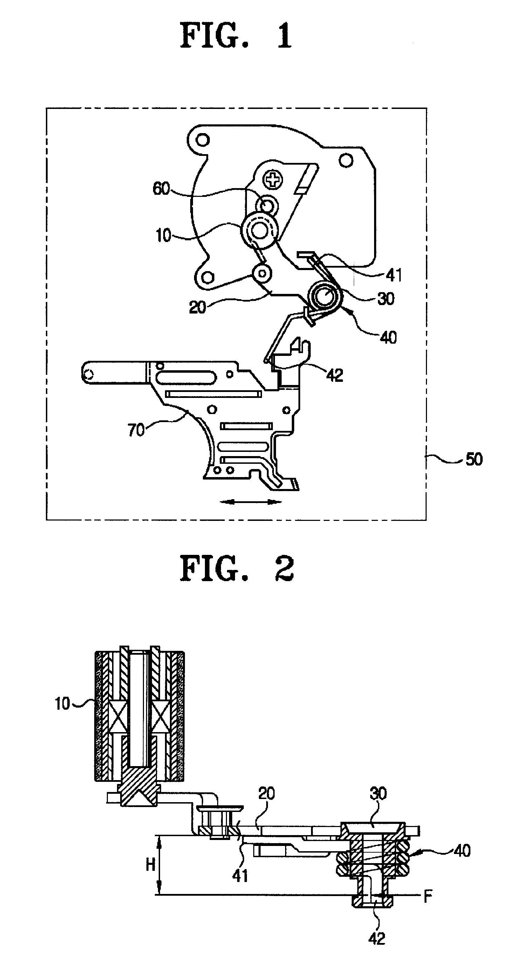

As shown in Figures 1 and 2, such known pinch roller assemblies for magnetic recording and playback apparatuses comprise a pinch roller 10, a pinch arm 20 one end of which rotatably supports the pinch roller 10, a pinch axis 30 connected to the other end of the pinch arm 20, and a pinch spring 40 engaged around the pinch axis 30.

The pinch arm 20 pivots between first and second positions along the pinch axis 30 and is rotatably arranged on a deck base 50. In the first position, the pinch roller 10 is adjacent to the capstan axis 60. In the second position, which is the initial position, the pinch roller 10 is separate from the capstan axis 60.

The pinch arm 20 pivots between the first and the second positions using a tape loading device (not shown). Particularly, the pinch spring 40 located on the pinch axis 30 tightly keeps the pinch roller 10 in the first position against the capstan axis 60.

The pinch spring 40 comprises a fixed end 41 supported by the pinch arm 20 and a free end 42. As shown in Figure 1, the free end 42 is obstructed by a slider 70 traversely orientated in the deck base 50. With respect to Figure 1, the slider 70 moves left when the tape is loaded and moves right when the tape is unloaded.

Also with respect to Figure 1, when the tape is loaded, the free end 42 of the pinch spring 40 moves to the first position and is moved using the slider 70. Therefore, the pinch roller 10 moves to tightly contact the capstan axis 60.

However, in the pinch roller assembly of the known magnetic recording and playback apparatus, undesired torsion may be applied to the pinch spring 40. This is due to a difference between the force (F) transferred by the slider 70 to the free end 42 of the pinch spring 40 and the force at the height (H) of a fixing end supporting part of the pinch spring 40. This torsion deviates the pinch spring 40 from its correct position.

Deviation of the pinch spring 40 may affect the height (H) of the free end 42 of the pinch spring 40. Therefore, the pinch spring 40 is not moved by the slider 70. In this case, the pinch roller 10 may fail to tightly contact with the capstan axis 60.

Accordingly, there is a need for an improved pinch roller assembly for a magnetic recording and reproducing apparatus having a protrusion to prevent deviation of the pinch spring.

A pinch assembly according to the present invention is characterised by protruding means configured to secure the position of the pinch spring relative to the pinch axis.

An aspect of the present invention is to solve at least the above problems and/or disadvantages and to provide at least the advantages described below. Accordingly, an aspect of the present invention is to provide a pinch roller assembly for a magnetic recording and reproducing apparatus which is capable of preventing a contact error of a pinch roller with respect to a capstan axis, caused by deviation of the pinch spring.

The present invention relates to a pinch roller assembly for use in a tape deck, the assembly comprising a pinch spring rotating about, and mounted on, a pinch axis.

A pinch roller assembly according to the present invention is characterised by means configured to secure the position of the pinch spring relative to the pinch axis, during rotation of the pinch spring.

Additional advantageous and/or preferred features are set forth in claims 2 to 6 appended hereto.

Embodiments of the present invention will now be described, by way of example only and with reference to Figures 3 to 6 of the accompanying drawings, in which:
Figure 1 is a plan view showing a known pinch roller assembly for a magnetic recording and playback apparatus;
Figure 2 is an enlarged sectional view showing a pinch roller assembly of Figure 1;
Figure 3 is a sectional view showing a pinch roller assembly for a magnetic recording and playback apparatus in accordance with an embodiment of the present invention;
Figure 4 is an enlarged sectional view of a pinch axis in accordance with an embodiment of the present invention;
Figure 5 is a sectional view showing parts of a pinch roller assembly for a magnetic recording and playback apparatus in accordance with another embodiment of the present invention; and
Figure 6 is a sectional view of main parts of a pinch roller assembly for a magnetic recording and playback apparatus in accordance with another embodiment of the present invention.

Throughout the drawings, the same drawing reference numerals will be understood to refer to the same elements, features, and structures.

Descriptions of well-known functions and constructions are omitted for conciseness.

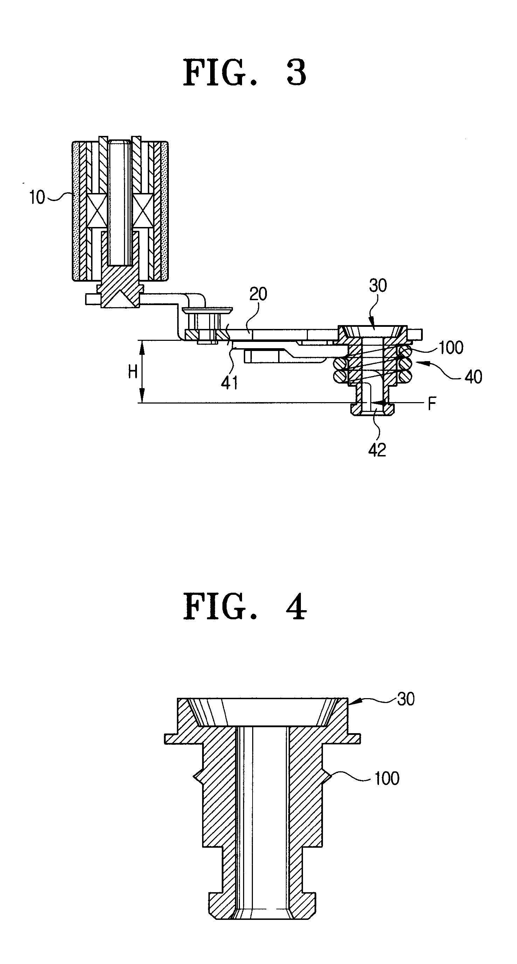

Referring to Figures 3 and 4, a pinch roller assembly comprises a pinch roller 10, a pinch arm 20 one end of which rotatably supports the pinch roller 10, a pinch axis 30 connected to the other end of the pinch arm 20, a pinch spring 40 around the pinch axis 30, and a separation preventing protrusion 100 formed on the pinch axis 30 to prevent the pinch spring 40 from moving from its correct position.

The pinch roller 10 selectively contacts a capstan axis 60 (Figure 1) arranged on a deck base 50 (Figure 1).

The pinch arm 20 pivots between a first position and a second position using the pinch axis 30. The pinch arm 20 is rotatably supported on the deck base 50. In the first position, the pinch roller 10 is adjacent to the capstan axis 60. In the second position (the initial position), the pinch roller 10 is spaced away from the capstan axis 60.

The pinch arm 20 pivots between the first and the second positions using a tape loading device (not shown). Particularly, the pinch spring 40 located on the pinch axis 30 relatively tightly presses the pinch roller 10 towards the capstan axis 60 when in the first position.

The pinch spring 40 comprises a fixed end 41 supported by the pinch arm 20 and a free end 42. As shown in Figure 1, the free end 42 is moved using a slider 70 which is transversely arranged in the deck base 50. The slider 70 moves left when the tape is loaded and moves right when the tape is unloaded, with respect to the position of Figure 1.

Also referring to Figure 1, when the tape is loaded, the free end 42 of the pinch spring 40 of the pinch arm 20 is moved to the first position and urged clockwise by the slider 70. Therefore, the pinch roller 10 relatively tightly contacts the capstan axis 60.

The separation preventing protrusion 100 supports the pinch spring 40. The separation preventing protrusion 100 correctly positions the pinch spring 40 about the pinch axis 30.

The separation preventing protrusion 100 is integrally formed on an outer circumference of the pinch axis 30 for insertion into grooves (between consecutive turns) of the pinch spring 40 to prevent the pinch spring 40 from escaping. The separation preventing protrusion 100 is preferably annularly shaped; however, other suitable arrangements/shapes may be used. Additionally, the separation preventing protrusion 100 preferably has a triangular longitudinal section to correspond to the grooves of the pinch spring 40; however, the structure and shape of the separation preventing protrusion 100 are not limited thereto.

According to the above-structured pinch roller assembly, when the pinch spring 40 is moved, by the free end 42 being contacted by the slider 70, although excessive torsion is applied to the pinch spring 40 the pinch spring 40 is maintained in the correct position. This is because the pinch spring 40 is supported by the separation preventing protrusion 100 of the pinch axis 30.

Accordingly, any error caused by the deviation of the pinch spring 40 affecting the contact between the pinch roller 10 and the capstan axis 60 may be prevented.

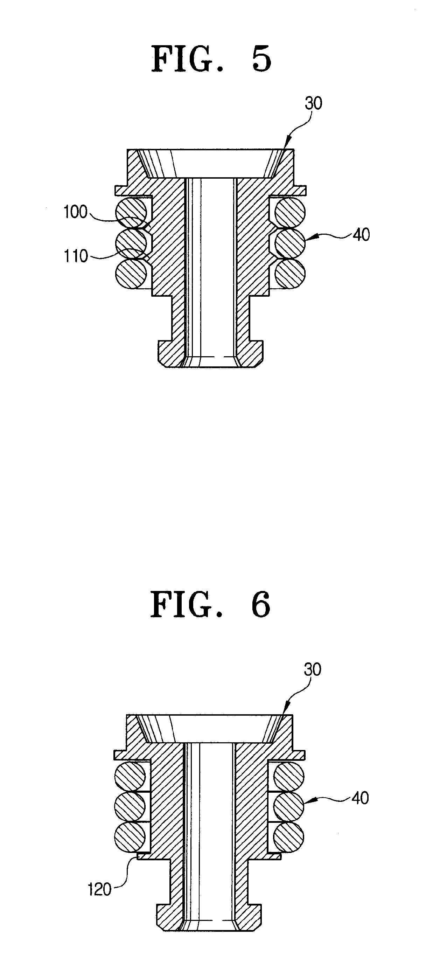

Referring to the embodiment of Figure 5, a pair of separation preventing protrusions 100 and 110 are integrally formed on the outer circumference of the pinch axis 30 separated by a predetermined distance. The other features are the same as those of the previous embodiment and description thereof will be omitted for purposes of clarity and conciseness. The pair of the separation preventing protrusions 100 and 110 are located so as to correspond to and fit into two grooves (between two consecutive turns) of the pinch spring 40, respectively. The separation preventing protrusions 100 and 110 are preferably formed in parallel or formed as a spiral; however, any suitable alternative arrangements may be used.

According to this embodiment, by adopting two separation preventing protrusions 100 and 110, the pinch spring 40 may be more securely supported, and therefore, deviation of the pinch spring 40 may be more effectively prevented.

Referring to the embodiment of Figure 6, a distinctive feature of this embodiment is that a separation preventing protrusion 120 supports a lower part of the pinch spring 40. Other structure and operation are similar to those of the other previous embodiments, so a detailed description of functions and constructions are omitted for of clarity and conciseness. The separation preventing protrusion 120 also prevents the deviation of the pinch spring 40 by supporting the pinch spring 40 in the correct position.

As can be appreciated from the above description, the pinch spring 40 is supported by the separation preventing protrusions 100, 110 or 120 mounted on the pinch axis 30. As a result, the pinch spring 40 may be properly located in the correct position without deviation, even though excessive torsion is being applied.

Therefore, the contact error of the pinch roller 10 to the capstan axis 60 may also be prevented. As a result, the tape running performance is improved and reliability of the apparatus is enhanced.

## Claims

1. A pinch roller assembly for use in a tape deck, the assembly comprising a pinch spring (40) rotating about, and mounted on, a pinch axis (30), **characterised by** means (100, 110) configured to secure the position of the pinch spring (40) relative to the pinch axis (30), during rotation of the pinch spring (40).

2. A pinch roller assembly according to claim 1, wherein the protruding means (100, 110) are located on the pinch axis (30).

3. A pinch roller assembly according to either one of claims 1 or 2, wherein the pinch spring (40) is mounted on a shaft.

4. A pinch roller assembly according to claim 3, wherein said means for securing is in the form of one or more protrusion(s) on the shaft.

5. A pinch roller assembly according to claim 4, wherein the protrusions (100, 110) are configured to be located between consecutive turns of the pinch spring (40).

6. A pinch roller assembly according to claim 4, wherein the protrusions (100, 110) comprise a first and second protrusion configured to be located above and below the first and last turn on the pinch spring (40), respectively.

7. A pinch roller assembly for a magnetic recording and reproducing apparatus comprising:
a pinch roller configured to selectively contact a capstan axis arranged on a deck base;
a pinch arm for rotatably supporting the pinch roller on one end thereof, the pinch arm being pivotally mounted on the deck base for movement between a first position and a second position, wherein when in the first position the pinch roller is adjacent to the capstan axis and when in the second position the pinch roller is spaced away from the capstan axis;
a pinch axis mounted on the other end of the pinch arm, the pinch axis being a pivot point of the pinch arm;
a pinch spring disposed on the pinch axis to elastically support the pinch arm when being pivoted to the first position toward the capstan axis; and
a separation preventing protrusion integrally formed on the pinch axis to prevent deviation of the pinch spring.

8. The pinch roller assembly of claim 7, wherein one separation preventing protrusion is provided to fit in a groove of the pinch spring.

9. The pinch roller assembly of claim 7, wherein a pair of separation preventing protrusions are formed to respectively fit in grooves of the pinch spring.

10. The pinch roller assembly of claim 7, wherein one separation preventing protrusion supports a lower part of the pinch spring.

11. The pinch roller assembly of claim 7, wherein the separation preventing protrusion is substantially annular.
